# EUROPÄISCHE PATENTSCHRIFT

(11) **EP 3 911 490 B1**
(45) Veröffentlichungstag und Bekanntmachung des Hinweises auf die Patenterteilung: **08.02.2023**
(21) Anmeldenummer: 19817630.7
(22) Anmeldetag: 05.12.2019
(51) Int. Cl.: B29C 45/14, B29C 70/76, F16L 47/24, B29L 31/24, B29L 23/00

(54) **VERFAHREN UND VORRICHTUNG ZUM HERSTELLEN EINER FLUIDLEITUNG MIT VERBINDUNGSELEMENT**
METHOD AND DEVICE FOR PRODUCING A FLUID LINE WITH CONNECTING ELEMENT
PROCÉDÉ ET DISPOSITIF POUR FABRIQUER UNE CONDUITE DE FLUIDE POURVUE D'UN ÉLÉMENT DE LIAISON

(30) Priorität: 18.01.2019 DE 102019200630
(43) Veröffentlichungstag der Anmeldung: 24.11.2021
(73) Patentinhaber: ContiTech MGW GmbH, 34346 Hann. Münden (DE)
(72) Erfinder: KASCHKA, Simon, 30419 Hannover (DE); KUHLHOFF, Florian, 30419 Hannover (DE)
(74) Vertreter: Continental Corporation
(86) Internationale Anmeldenummer: PCT/EP2019/083781
(87) Internationale Veröffentlichungsnummer: WO 2020/148017

(56) Entgegenhaltungen:
- EP-A1- 3 404 305
- EP-A2- 1 217 280
- DE-A1- 19 854 707
- DE-A1-102014 004 157
- DE-A1-102014 215 261
- FR-A- 1 421 906
- US-A1- 2003 030 277
- US-A1- 2006 066 100

## Beschreibung

Die Erfindung betrifft ein Verfahren sowie eine Vorrichtung zum Herstellen einer Fluidleitung mit einem an einem Endabschnitt der Fluidleitung ausgebildeten Verbindungselement, wobei das Verbindungselement ein Kupplungsteil und einen an das Kupplungsteil zum Ende der Fluidleitung hin anschließenden Anschlussstutzen umfasst.

Fluidleitungen mit derartigen Verbindungselementen sind bekannt und werden im Automobilbau häufig auf Basis der sogenannten VDA-Kupplungen aufgebaut.

Ein Teil derartiger Verbindungselemente stellen sogenannte VDA-Anschlussstutzen oder -stecker an einem Ende einer Fluidleitung dar, die mit einer entsprechenden Kupplung an einem anderen Ende einer anzuschließenden Fluidleitung verbunden werden können. Diese VDA-Anschlussstutzen zeichnen sich dadurch aus, dass ausgehend vom zu verbindenden Ende zunächst ein Anschlussstutzen vorgesehen ist und in einem gewissen Abstand vom zu verbindenden Ende und unmittelbar angrenzend an den Anschlussstutzen ein üblicherweise ringförmiges Kupplungsteil vorgesehen ist, welches als VDA-Verrastungsring ausgeführt ist.

Zur Ausbildung der Anschlussstecker an fluidführenden Metallleitungen nach dem VDA-Prinzip ist es bislang bekannt, einen entsprechenden Kupplungsstecker als separates Bauteil zu fertigen, und zwar mittels Dreh- und Fräsbearbeitung. Die auf diese Weise hergestellten rotationssymmetrischen Bauteile benötigen eine Nut, in die eine Passfeder eingelötet oder eingeschweißt wird. Anschließend wird der Kupplungsstecker an die Fluidleitung mittels Schweiß- oder Lötverfahren abdichtend angebracht. Die Dichtheit der Fügestelle muss gewährleistet sein. Die Oberfläche des solchermaßen zusammengefügten Anschlusssteckers bildet die Dichtfläche für den O-Ring eines entsprechenden Kupplungsgegenstücks. Das Abdichten der Fluidleitung an der Fügestelle zum Kupplungsstecker gestaltet sich aufwendig und bei der Dreh- und Fräsbearbeitung entstehen hohe Fertigungskosten. Aufgrund der eingesetzten Fügeverfahren ist überdies eine Korrosionsschutzbeschichtung erforderlich und eine 100 %ige Dichtigkeitsprüfung. All dies ist sehr aufwendig und nachteilig. Überdies lassen sich Verdrehsicherungen aufgrund der Rotationssymmetrie nicht ohne Mehraufwand darstellen.

Aus der DE 10 2017 207 950 A1 ist überdies eine Fluidleitungsverbindung bekannt, bei der ein Kupplungsteil aus Kunststoff mit einem Anschlussabschnitt und ein Rohr aus Metall zur Ausbildung eines VDA-Kupplungsteils miteinander verbunden werden. Die EP 1 217 280 A2 zeigt ferner einen flexiblen Schlauch, an dessen Endabschnitt eine Kupplungseinrichtung aus thermoplastischem Kunststoff durch Spritzgießen angebracht ist. Zudem ist aus der US 2006 066 100 A1 eine Schlauch-Rohr-Verbindung bekannt, bei der der Schlauch geweitet und zur Verbindungsherstellung umspritzt wird.

Aufgabe der Erfindung ist es, ein Verfahren sowie eine Vorrichtung der eingangs genannten Art vorzuschlagen, mit welchen der zur Herstellung derartiger Fluidleitungen erforderliche Aufwand erheblich reduziert werden kann und eine Dichtigkeitsprüfung nach Möglichkeit entbehrlich werden soll.

Zur Lösung der gestellten Aufgabe wird erfindungsgemäß ein Verfahren gemäß den Merkmalen des Patentanspruchs 1 vorgeschlagen.

Eine Vorrichtung gemäß der Erfindung ist Gegenstand des Patentanspruchs 11.

Vorteilhafte Ausgestaltungen und Weiterbildungen der Erfindung sind Gegenstand der abhängigen Ansprüche.

Im Rahmen des erfindungsgemäßen Herstellungsverfahrens wird vorgeschlagen, die folgenden Herstellungsschritte auszuführen:
Zunächst wird in ein bereitgestelltes Spritzgiesswerkzeug mit einer Kavität zur Ausbildung des Kupplungsteiles in geöffnetem Zustand desselben ein dem Kupplungsteil zugeordneter Abschnitt der Fluidleitung eingelegt, wobei auf der einen Seite der an den Endabschnitt der Fluidleitung anschließende weitere Abschnitt der Fluidleitung über die Kavität hinausragt und auf der gegenüberliegenden Seite ein dem Anschlussstutzen zugeordneter Längenabschnitt der Fluidleitung über die Kavität hinausragt.

Das Spritzgiesswerkzeug ist üblicherweise aus zwei öffen- und schließbaren Werkzeughälften aufgebaut, die jeweils einen Teil der gesamten Kavität beinhalten und in geschlossenem Zustand entlang einer Fügefläche aufeinander abdichtend zur Anlage kommen.

Nachdem die Fluidleitung in der bereits beschriebenen Weise eingelegt ist, wird das Spritzgiesswerkzeug und die darin ausgebildete Kavität mit dem aufgenommenen Abschnitt der Fluidleitung geschlossen und der über die Kavität hinausragende, dem Anschlussstutzen zugeordnete Längenabschnitt wird vorzugsweise zylindrisch aufgeweitet.

Diese erfindungsgemäße Aufweitung des Längenabschnittes kann beispielsweise über einen entsprechenden Dorn erfolgen, der in den Endabschnitt der Fluidleitung axial eingefahren wird.

Anschließend wird der Dorn wieder aus dem Endabschnitt der Fluidleitung entfernt und der zurückbleibende aufgeweitete Längenabschnitt wird in einer Glocke aufgenommen, die den aufgeweiteten Längenabschnitt außenseitig umgibt. Hierbei wird der Außendurchmesser des aufgeweiteten Längenabschnittes kalibriert, d. h. auf seinen vorgesehenen Enddurchmesser geformt, womit der Anschlussstutzen fertig ausgebildet wird und zugleich dessen Außendurchmesser gegenüber der Kavität abgedichtet wird.

Sodann ist es möglich, in einem nachfolgenden Schritt den vorgesehenen Kunststoff zur Ausbildung des Kupplungsteiles auf der Fluidleitung in die Kavität im Spritzgussverfahren einzuspritzen und Aushärten zu lassen. Aufgrund der Abdichtung zwischen dem Außendurchmesser des Anschlussstutzens und der Glocke wird dabei ein Austritt von Kunststoff aus der Kavität zwischen Glocke und Anschlussstutzen verhindert.

Anschließend kann die Glocke vom Anschlussstutzen abgenommen werden, die Kavität geöffnet und die Fluidleitung mit umfänglich aufgespritztem Kupplungsteil entnommen werden.

Da die Fluidleitung weiterhin einstückig bis zum Ende des Anschlussstutzens ausgeführt ist, ist eine Dichtigkeitsprüfung der fluidführenden Leitungswege nicht notwendig. Das Kupplungsteil wird lediglich durch Umspritzen des Außendurchmessers der Fluidleitung mit Kunststoff ausgebildet, sodass die Fluidleitung nicht unterbrochen wird.

Die Abdichtung der Kavität im Bereich zwischen dem Anschlussstutzen der Fluidleitung und der Glocke ermöglicht es, auf Anprägungen der Fluidleitung zur Herstellung der Dichtigkeit zu verzichten, ferner ist auf der Dichtfläche der hergestellten Fluidleitung kein Werkzeugabdruck in Folge der Formtrennung von Ober- und Unterteil des Spritzgusswerkzeuges erkennbar.

Nach einem Vorschlag der Erfindung wird der Endbereich der Fluidleitung zunächst übermässig aufgeweitet und nachfolgend mittels der Glocke zu dem Anschlussstutzen mit einem vorbestimmten und gegenüber dem Übermaß kleineren Außendurchmesser kalibriert. Eine solche übermässige Aufweitung kann beispielsweise 0,4 bis 0,5 mm im Durchmesser betragen. Durch das nachfolgende Kalibrieren wird der fertig gestellte kalibrierte Anschlussstutzen gegenüber der Innenoberfläche der Glocke unter Spannung gesetzt, woraus die gewünschte Dichtwirkung gegenüber Kunststoff-Schmelzeaustritt aus der Kavität resultiert.

Nach einem weiteren Vorschlag der Erfindung wird auch der Innendurchmesser des in der Glocke aufgenommenen Anschlussstutzens kalibriert, wozu beispielsweise ein zentral innerhalb der Glocke angeordneter Kalibrierdorn verwendet werden kann, der beim Aufsetzen der Glocke und Aufnehmen des Anschlussstutzens in das Lumen der Fluidleitung im Bereich des Anschlussstutzens eintaucht.

Nach einem weiteren Vorschlag der Erfindung kann der in der Glocke aufgenommene Anschlussstutzen durch entsprechende Konturierung derselben mit einer zum Ende hin verjüngenden Anschrägung versehen werden, die beim Verbinden der Fluidleitung mit einem entsprechenden Gegenstück als Einführschräge für einen Dichtungsring dient.

Nach einem weiteren Vorschlag der Erfindung kann der dem Kupplungsteil zugeordnete Längenabschnitt der Fluidleitung mit mindestens einer radial nach außen vorstehenden Rippe und/oder Aufwerfung versehen werden, beispielsweise durch entsprechende Konturierung des zentral innerhalb der Glocke angeordneten Kalibrierdorns und/oder durch eine beispielsweise mittels Kniehebel betätigte Exzenter-Scheibe. Derartige radial nach außen vorstehende Rippen bewirken in Bezug auf das nachfolgend in diesem Umfangsbereich der Fluidleitung durch Spritzgießen erzeugte Kupplungsteil eine radiale Verdrehsicherung, entsprechend bewirkt eine nach außen vorstehende Aufwerfung eine axiale Verschiebesicherung des Kupplungsteils in Bezug auf die Fluidleitung.

Darüber hinaus kann vorgesehen sein, dass bei geöffneter Kavität ein Anschlagvorsprung für die Anlage des Endabschnittes der Fluidleitung vorgesehen ist, um diese stets definiert und einfach automatisierbar in die Kavität der geöffneten Spritzgussform einlegen zu können. Es kann vorgesehen sein, beim Schließen der Kavität den Anschlagvorsprung zu entfernen bzw. zurückzuziehen, um nachfolgend ungehinderten Zugang mittels des Dorns und/oder der Glocke zum Endabschnitt der Fluidleitung vorzufinden.

Die im Rahmen des erfindungsgemäßen Verfahrens zum Einsatz kommenden Fluidleitungen können beispielsweise auf Basis eines Aluminiumrohrs ausgebildet sein, wie sie üblicherweise in der Automobilindustrie Verwendung finden. Dabei wird die Fluidleitung häufig bereichsweise mit einer außenseitigen Kunststoffbeschichtung versehen, die gegebenenfalls im Bereich des auszubildenden Anschlussstutzens entfernt wird. Vorzugsweise wird zur Ausbildung des Kupplungsteiles der gleiche oder ein mit dem Kunststoff der Beschichtung kompatibler Kunststoff verwendet, um eine gute Haftung zwischen Kupplungsteil und beschichtet der Fluidleitung zu erreichen.

Beispiele des verwendeten Kunststoffes umfassen temperaturbeständige Kunststoffe, beispielsweise Polyamide wie PA12.

Es versteht sich, dass das erfindungsgemäße Verfahren auch bei Spritzgiesswerkzeugen Anwendung finden kann, die mehrere Kavitäten zur gleichzeitigen Herstellung entsprechend mehrerer Fluidleitungen in einem Arbeitsgang aufweisen. In diesem Falle wird eine entsprechende Anzahl an zur Aufweitung verwendeten Dornen und zur Kalibrierung und Abdichtung verwendeten Glocken entsprechend der Anzahl an Kavitäten vorgesehen.

Eine im Rahmen der Erfindung vorgeschlagene Vorrichtung, die insbesondere zur Durchführung des vorangehend erläuterten erfindungsgemäßen Verfahrens geeignet ist, umfasst ein öffen- und schließbares Spritzgiesswerkzeug mit einer die Außenkontur des Kupplungsteiles definierenden Kavität, in welche der dem Kupplungsteil zugeordnete Abschnitt der Fluidleitung einlegbar ist, wobei bei geschlossenem Spritzgiesswerkzeug ein dem Anschlussstutzen zugeordneter Längenabschnitt der Fluidleitung über die Kavität hinausragt.

Darüber hinaus ist ein Dorn zum endseitigen Einführen und Aufweiten des dem Anschlussstutzen zugeordneten Längenabschnittes der Fluidleitung vorgesehen und eine Glocke zum Aufnehmen und Kalibrieren des aufgeweiteten Längenabschnittes zu dem Anschlussstutzen und zum Abdichten des Anschlussstutzens gegenüber der Kavität.

Nach einem Vorschlag der Erfindung sind der Dorn und die Glocke auf einem gemeinsamen verschiebbaren Werkzeugträger angeordnet, sodass in einer einzigen Aufspannung alle Arbeitsschritte zur Herstellung der Fluidleitung durchgeführt werden können.

Nach einem Ausführungsbeispiel der Erfindung weist der Dorn einen größeren Außendurchmesser als der Innendurchmesser der Glocke auf, sodass beim Kalibrieren des Anschlussstutzens eine radial nach innen wirkende Kraft auf den Anschlussstutzen ausgeübt wird, die entsprechende Spannungen im Anschlussstutzen hervorruft und für die Erzielung einer guten Dichtwirkung zwischen der äußeren Oberfläche des Anschlussstutzens und inneren Oberfläche der Glocke verantwortlich ist.

Die Glocke kann darüber hinaus einen zentralen Kalibrierdorn zum Kalibrieren des Innendurchmessers des Anschlussstutzens und/oder zum Erzeugen mindestens einer radial nach außen vorstehenden Rippe und/oder Aufwerfung in dem dem Kupplungsteil zugeordneten Längenabschnitt der Fluidleitung umfassen. Um insoweit bis in den dem Kupplungsteil zugeordneten Längenabschnitt der Fluidleitung zu reichen, ist der Kalibrierdorn gegenüber der Glocke entsprechend länger und vorstehend ausgebildet.

Die Glocke kann darüber hinaus so konfiguriert sein, dass bei Aufnahme des Anschlussstutzens eine zum Ende hin verjüngenden Anschrägung im Anschlussstutzen erzeugbar ist, die bei späterer Benutzung der Fluidleitung als Einführschräge für einen O-Ring dienen kann.

Darüber hinaus kann die Vorrichtung auch einen Anschlagvorsprung zum passgenauen Anlegen des Endabschnittes der Fluidleitung aufweisen.

Schließlich können im Rahmen der erfindungsgemäßen Vorrichtung auch eine Mehrzahl von Kavitäten, Dornen und Glocken zum gleichzeitigen Herstellen einer solchen Mehrzahl von Fluidleitungen vorgesehen sein.

Die Erfindung wird nachfolgend anhand eines Ausführungsbeispieles in der Zeichnung weiter erläutert. Es zeigen:
- Figuren 1 bis 3: in schematisierter Darstellung das Unterteil einer nach dem erfindungsgemäßen Verfahren arbeitenden Vorrichtung in mehreren aufeinanderfolgenden Arbeitsschritten;
- Figur 4: einen Teilschnitt durch eine Glocke der erfindungsgemäßen Vorrichtung.

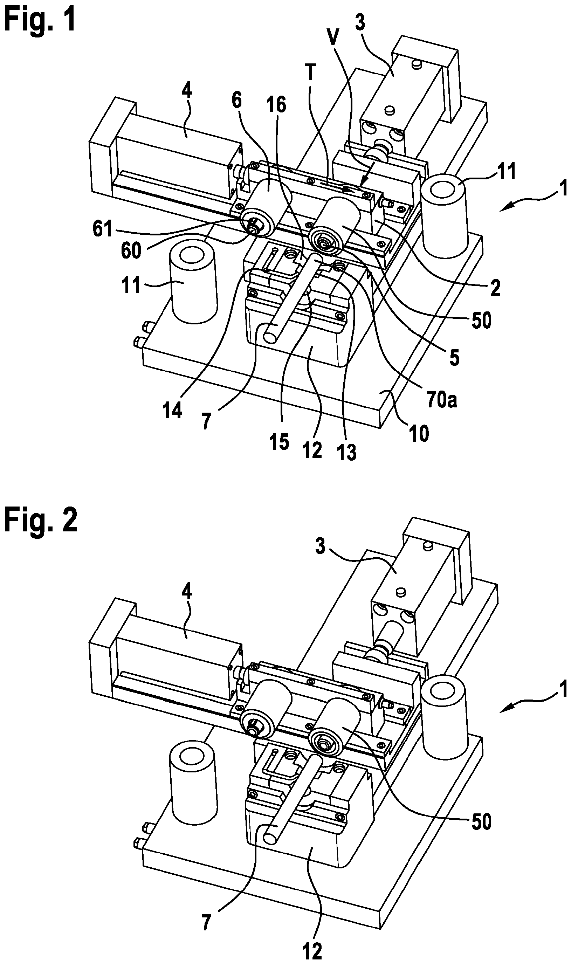

Aus den Figuren 1 bis 3 ist in einer vereinfachten Darstellung ein Teil, hier das Unterteil, einer Vorrichtung zur Herstellung einer Fluidleitung mit einem am Endabschnitt der Fluidleitung ausgebildeten Verbindungselement, insbesondere einem VDA-Anschlussstutzen dargestellt.

Zur besseren Übersichtlichkeit sind sämtliche Bauteile der Vorrichtung lediglich in Figur 1 mit Bezugszeichen versehen worden, bei der nachfolgenden Erläuterung wird insoweit stets auch auf Figur 1 Bezug genommen.

Man erkennt ein global mit Bezugszeichen 1 gekennzeichnetes Spritzgiesswerkzeug in Gestalt des Werkzeugunterteils mit einer Basisplatte 10, auf der in zwei gegenüberliegenden Eckbereichen Zentrierbuchsen 11 befestigt sind, in die beim Schließen des hier nicht dargestellten Werkzeugoberteils entsprechende Zentrierzapfen eintauchen.

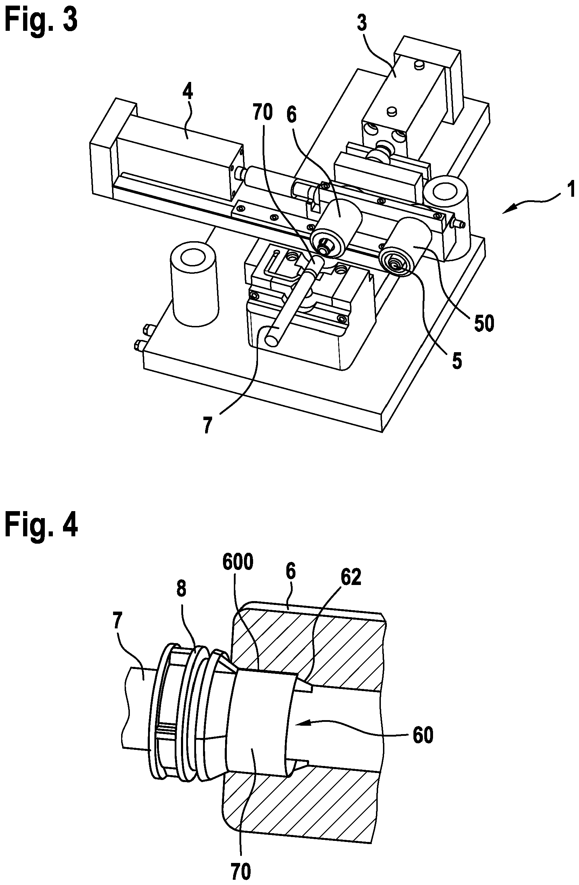

Auf der Basisplatte 10 ist ein Formunterteil 12 der Spritzgussform mit der entsprechenden unteren Hälfte der Kavität 13 befestigt, die eine zur Ausbildung der Außenkontur des gewünschten Kupplungsteils 8, siehe Figur 4, geeignete Gestaltung aufweist.

In der Darstellung gemäß Figur 1 hinter der Spritzgussform 12 ist ein Werkzeugträger 2 angeordnet, der einen Dorn 5 sowie eine konzentrisch um den Dorn unter Belassung eines zylindrischen Spaltraumes angeordnete Hülse 50 trägt.

Darüber hinaus ist auf dem gemeinsamen Werkzeugträger 2 auch eine in ihren Außenabmessungen mit der Hülse 50 übereinstimmende Glocke 6 befestigt, die über einen zentralen sowie in Richtung auf die Spritzgussform bzw. das hier dargestellte Formunterteil 12 vorstehenden Kalibrierdorn 60 verfügt. Auch zwischen dem Kalibrierdorn 60 und der Glocke 6 ist ein zylindrischer Spaltraum ausgebildet.

Mittels zweier um 90° versetzt zueinander in einer gemeinsamen Ebene angeordneter Antriebe 3, 4, die beispielsweise als Pneumatikzylinder ausgeführt sind, ist der Werkzeugträger 2 mitsamt der daran befestigten Glocke 6 sowie des Dorns 5 aufgrund einer Führung in entsprechenden Schienen 20 in und entgegen Pfeilrichtung T mittels Antrieb 4 und rechtwinklig dazu in und entgegen Pfeilrichtung V mittels Antrieb 3 verfahrbar.

Zur Herstellung einer Fluidleitung mit am Endabschnitt ausgebildeten Verbindungselement wird bei geöffnetem Spritzgiesswerkzeug 1 und entsprechend zugänglicher Kavität 13 ein Rohling der Fluidleitung 7, beispielsweise ein Aluminiumrohr konstanten Durchmessers in das geöffnete Spritzgiesswerkzeug 1 eingelegt, dergestalt, dass der dem späteren Kupplungsteil zugeordnete Abschnitt der Fluidleitung 7 in der Kavität 13 zum Liegen kommt. Demgemäß ragt der sich anschließende, dem späteren Anschlussstutzen zugeordnete Längenabschnitt 70a der Fluidleitung über die Kavität 13 hinaus in einen entsprechenden stufenförmig erweiterten Aufnahmebereich 16 des Formunterteils 12.

Gegenüberliegend ragt der verbleibende Längenabschnitt der Fluidleitung 7 über eine in die Kavität 13 führende Einführöffnung 15 gegenüber dem Aufnahmebereich 16 ebenfalls aus der Kavität 13 heraus und kann mittels nicht dargestellter Abstützungsmittel abgestützt werden.

Zum erleichterten Auffinden dieser exakten Positionierung der Fluidleitung 7 mit dem dem späteren Kupplungsteil zugeordneten Abschnitt der Fluidleitung 7 innerhalb der geöffneten Kavität 13 kann ein gegebenenfalls zurückziehbarer Anschlagvorsprung vorgesehen sein, an den der Endabschnitt der Fluidleitung 7 beim Einlegen in das Formunterteil 12 angelegt wird.

Es versteht sich, dass das Formoberteil, das hier nicht dargestellt ist, entsprechend spiegelbildlich angeordnet ist.

Nach dem Einlegen der Fluidleitung 7 gemäß der Darstellung in Figur 1 kann das Spritzgiesswerkzeug 1 geschlossen werden, d. h. das entsprechende hier nicht dargestellte Formoberteil wird auf das Formunterteil 12 aufgesetzt.

Nun kann durch Betätigung des Antriebes 3 der Werkzeugträger 2 gemäß Pfeil V in Richtung auf die eingelegte Fluidleitung 7 verlagert werden, wobei der insoweit koaxial zur Fluidleitung 7 ausgerichtete Dorn 5 in den aus der Kavität 13 hinausragenden Längenabschnitt 70a der Fluidleitung 7 eintaucht und auf einen vergrößerten Durchmesser aufweitet, wie in Figur 2 dargestellt. Dabei taucht die den Dorn umgebende Hülse 50 in den Aufnahmebereich 16 ein und der aufgeweitete Längenabschnitt 70a kommt im zylindrischen Spaltraum zwischen Dorn 5 und Hülse 50 zum Liegen.

Anschließend kann der Antrieb 3 zurückbewegt werden und der Antrieb 4 in Pfeilrichtung T betätigt werden, sodass die auf dem Werkzeugträger 2 befestigte Glocke 6 und der zentral vorstehend angeordnete Kalibrierdorn 60 koaxial zum aufgeweiteten Längenabschnitt 70a der Fluidleitung 7 ausgerichtet werden, siehe Figur 3.

Durch erneute Vorverlagerung des Antriebes 3 in Pfeilrichtung V taucht der Kalibrierdorn 60 in den aufgeweiteten Längenabschnitt 70a der Fluidleitung 7 ein, wobei entsprechende auf dem Kalibrierdorn angeordnete Vorsprünge 61 radial nach außen vorstehende Rippen im Längenabschnitt 70a der Fluidleitung 7 ausbilden. Gleichzeitig taucht die Glocke 6 wie bereits zuvor die Hülse 50 in den Aufnahmebereich 16 ein und nimmt den aufgeweiteten Längenabschnitt 70a der Fluidleitung 7 im Bereich ihrer dem zylindrischen Spaltraum zugewandten Innenoberfläche auf.

Es ist vorgesehen, dass der Dorn 5 den Längenabschnitt 70a in Bezug auf den Innendurchmesser der Glocke 6 leicht übermaßig aufweitet, zum Beispiel auf ein Übermaß von etwa 0,4 bis 0,5 mm im Durchmesser. Beim Eintauchen in die Glocke 6 wird somit der Längenabschnitt 70a im Bereich seiner Außenoberfläche leicht radial zurückgedrängt und auf sein Fertigmaß kalibriert, wobei gleichzeitig auch die Innenoberfläche vom Kalibrierdorn 60 unter Erzeugung der radial vorstehenden Rippen kalibriert wird.

Dieser Zustand ist in einer vereinfachten Darstellung in der Figur 4 ersichtlich, wobei ferner erkennbar ist, dass innerhalb der Glocke eine Anschrägung 62 vorgesehen ist, die dem freien Ende der Fluidleitung 7 eine entsprechend verjüngende Anschrägung verleiht, die später als Einführhilfe für einen O-Ring eines Gegenstücks der Fluidleitung 7 dient.

Infolge der radial nach innen gerichteten Kalibrierung der Oberfläche des in der Glocke 6 aufgenommenen Endabschnittes der Fluidleitung 7 wird der Anschlussstutzen 70 mit dem gewünschten Fertigmaß erzeugt, wobei radiale Spannungen im Material der Fluidleitung 7 erzeugt werden, die eine gute Flächenpressung zwischen dem Anschlussstutzen 70 und der Innenoberfläche der Glocke 6 im Bereich des Spaltes 600 herstellen. Auf diese Weise wird mittels der in den Aufnahmebereich 16 eingetauchten Glocke 6 die Kavität 13 abdichtend verschlossen, sodass nachfolgend über den aus der Figur 1 ersichtlichen Schmelzekanal 14 Kunststoffmaterial in die Kavität 13 eingespritzt werden kann, ohne dass die Gefahr besteht, dass dieses Material über den abgedichteten Spalt 600 austreten kann.

Somit kann das aus der Figur 4 ersichtliche Kupplungsteil 8 aus dem verwendeten Kunststoff, beispielsweise PA12 auf der Außenoberfläche der Fluidleitung 7 durch Umspritzen in der Kavität 13 hergestellt werden, wobei die zuvor mittels des Kalibrierdorns 60 erstellten radial nach außen vorstehenden Rippen eine axiale Verdrehsicherung bewirken. Eine gegebenenfalls zusätzlich erzeugte radiale Aufwerfung kann auch eine axiale Verschiebesicherung bewirken.

Nach dem Aushärten des eingespritzten Kunststoffes in der Kavität 13 kann die Glocke 6 entgegen Pfeil V zurückgezogen, das Spritzgiesswerkzeug 1 geöffnet und die fertige Fluidleitung 7 mit am Endabschnitt der Fluidleitung 7 ausgebildeten Verbindungselement aus Kupplungsteil 8 und anschließendem Anschlussstutzen 70 entnommen werden.

Da das Kupplungsteil 8 lediglich auf die durchgehende Fluidleitung 7 aufgespritzt worden ist, ist keine anschließende Dichtigkeitsprüfung erforderlich. Darüber hinaus erfolgen sämtliche Bearbeitungsschritte in einer einzigen Aufspannung und damit mit einer minimalen Anzahl an Handhabungsschritten.

Sofern die verwendete Fluidleitung 7 ihrerseits mit einer Kunststoffumwandlung versehen ist, wird vorgeschlagen, diese aus einem kompatiblen oder vorzugsweise identischen Kunststoff zum Kupplungsteil 8 herzustellen und gegebenenfalls im Bereich des dem Anschlussstutzen 70 zugeordneten Längenabschnitt 70a vor dem Einlegen in die vorangehend erläuterte Vorrichtung zu entfernen.

Die mit der vorangehend erläuterten Erfindung erzielbaren Vorteile liegen in einer bedeutenden Kostenreduktion durch Wegfall bisher notwendiger Schweiß- und Lötverfahren sowie anschließender Dichtheitsprüfungen, in erheblicher Kostenreduktion durch Entfall einer Korrosionsschutzbehandlung, ferner in einer Gewichtsersparnis und Einsparung von notwendigen Fertigungsschritten.

Es versteht sich, dass die vorangehend erläuterte Vorrichtung und das Verfahren nicht nur zur Herstellung von VDA-Anschlussstutzen, sondern auch beliebigen anderen Verbindungselementen an einer Fluidleitung geeignet sind.

### Bezugszeichenliste:

- 1:: Spritzgiesswerkzeug
- 2:: Werkzeugträger
- 3,4:: Antrieb
- 5:: Dorn
- 6:: Glocke
- 7:: Fluidleitung
- 8:: Kupplungsteil
- 10:: Basisplatte
- 11:: Zentrierbuchsen
- 12:: Formunterteil
- 13:: Kavität
- 14:: Schmelzekanal
- 15:: Einführöffnung
- 16:: Aufnahmebereich
- 20:: Schiene
- 50:: Hülse
- 60:: Kalibrierdorn
- 61:: Vorsprünge
- 62:: Anschrägung
- 70:: Anschlussstutzen
- 70a:: Längenabschnitt
- 600:: Dichtfläche

- V, T:: Richtungspfeile

## Patentansprüche

1. Verfahren zum Herstellen einer Fluidleitung (7) mit einem an einem Endabschnitt der Fluidleitung (7) ausgebildetem Verbindungselement, wobei das Verbindungselement ein Kupplungsteil (8) und einen an das Kupplungsteil (8) zum Ende der Fluidleitung hin anschließenden Anschlussstutzen (70) umfasst,
aufweisend folgende Schritte:
- Einspritzen von Kunststoff in die Kavität (13) unter Ausbildung des Kupplungsteils (8) auf der Fluidleitung (7);
- Öffnen der Kavität (13) und Entnahme der Fluidleitung (7), **gekennzeichnet durch** die folgenden Schritte:
- Einlegen des dem Kupplungsteil (8) zugeordneten Abschnittes der Fluidleitung (7) in eine geöffnete Kavität (13) eines das Kupplungsteil (8) ausbildenden Spritzgiesswerkzeuges (1), wobei ein dem Anschlussstutzen (70) zugeordneter Längenabschnitt (70a) der Fluidleitung (7) über die Kavität (13) hinausragt;
- Schließen der Kavität (13) und Aufweiten des über die Kavität (13) hinausragenden Längenabschnittes;
- Aufnehmen des aufgeweiteten Längenabschnittes in einer Glocke (6), wobei unter Ausbildung des Anschlussstutzens (70) der Außendurchmesser gegenüber der Kavität (13) abdichtend kalibriert wird.

2. Verfahren nach Anspruch 1, **dadurch gekennzeichnet, dass** der Längenabschnitt (70a) zunächst übermaßig aufgeweitet und nachfolgend mittels der Glocke (6) zu dem Anschlussstutzen (70) mit einem vorbestimmten kleineren Außendurchmesser kalibriert wird.

3. Verfahren nach Anspruch 1 oder 2, **dadurch gekennzeichnet, dass** auch der Innendurchmesser des in der Glocke (6) aufgenommenen Anschlussstutzens (70) kalibriert wird.

4. Verfahren nach einem der Ansprüche 1 bis 3, **dadurch gekennzeichnet, dass** der in der Glocke (6) aufgenommene Anschlussstutzen (70) mit einer zum Ende hin verjüngenden Anschrägung versehen wird.

5. Verfahren nach einem der Ansprüche 1 bis 4, **dadurch gekennzeichnet, dass** der dem Kupplungsteil (8) zugeordnete Längenabschnitt der Fluidleitung (7) mit mindestens einer radial nach außen vorstehenden Rippe und/oder Aufwerfung versehen wird.

6. Verfahren nach einem der Ansprüche 1 bis 5, **dadurch gekennzeichnet, dass** bei geöffneter Kavität (13) ein Anschlagvorsprung für die Anlage des Endabschnittes der Fluidleitung (7) vorgesehen ist.

7. Verfahren nach einem der Ansprüche 1 bis 5, **dadurch gekennzeichnet, dass** eine Fluidleitung (7) auf Basis eines Aluminiumrohrs verwendet wird.

8. Verfahren nach einem der Ansprüche 1 bis 6, **dadurch gekennzeichnet, dass** die Fluidleitung (7) bereichsweise mit einer außenseitigen Kunststoffbeschichtung versehen ist und zur Ausbildung des Kupplungsteiles (8) der gleiche oder ein mit dem Kunststoff der Beschichtung kompatibler Kunststoff verwendet wird.

9. Verfahren nach Anspruch 7, **dadurch gekennzeichnet, dass** als Kunststoff ein Polyamid verwendet wird.

10. Verfahren nach einem der Ansprüche 1 bis 9, **dadurch gekennzeichnet, dass** das Spritzgiesswerkzeug (1) mehrere Kavitäten (13) zur gleichzeitigen Herstellung entsprechend mehrerer Fluidleitungen (7) umfasst.

11. Vorrichtung zum Herstellen einer Fluidleitung (7) mit einem an einem Endabschnitt der Fluidleitung ausgebildetem Verbindungselement, wobei das Verbindungselement ein Kupplungsteil (8) und einen an das Kupplungsteil (8) zum Ende der Fluidleitung (7) hin anschließenden Anschlussstutzen (70) umfasst, **gekennzeichnet durch**
a. ein öffen- und schließbares Spritzgiesswerkzeug (1) mit einer die Außenkontur des Kupplungsteiles (8) definierenden Kavität (13), in welche der dem Kupplungsteil (8) zugeordnete Abschnitt der Fluidleitung (7) einlegbar ist, wobei bei geschlossenem Spritzgießwerkzeug (1) ein dem Anschlussstutzen (70) zugeordneter Längenabschnitt (70a) der Fluidleitung (7) über die Kavität (13) hinausragt;
b. einen Dorn (5) zum endseitigen Einführen und Aufweiten des dem Anschlussstutzen (70) zugeordneten Längenabschnittes (70a) der Fluidleitung (7);
c. eine Glocke (6) zum Aufnehmen und Kalibrieren des aufgeweiteten Längenabschnittes (70a) zu dem Anschlussstutzen (70) und Abdichten des Anschlussstutzens (70) gegenüber der Kavität (13).

12. Vorrichtung nach Anspruch 11, **dadurch gekennzeichnet, dass** der Dorn (5) und die Glocke (6) auf einem gemeinsamen verschiebbaren Werkzeugträger (2) angeordnet sind.

13. Vorrichtung nach Anspruch 11 oder 12, **dadurch gekennzeichnet, dass** der Dorn (5) einen größeren Außendurchmesser als der Innendurchmesser der Glocke (6) aufweist.

14. Vorrichtung nach einem der Ansprüche 11 bis 13, **dadurch gekennzeichnet, dass** die Glocke (6) einen zentralen Kalibrierdorn (60) zum Kalibrieren des Innendurchmessers des Anschlussstutzens (70) und/oder zum Erzeugen mindestens einer radial nach außen vorstehenden Rippe und/oder Aufwerfung in dem dem Kupplungsteil (8) zugeordneten Längenabschnitt der Fluidleitung (7) umfasst.

15. Vorrichtung nach einem der Ansprüche 11 bis 14, **dadurch gekennzeichnet, dass** die Glocke (6) so konfiguriert ist, dass eine zum Ende hin verjüngenden Anschrägung des Anschlussstutzens (70) erzeugbar ist.

16. Vorrichtung nach einem der Ansprüche 11 bis 15, **dadurch gekennzeichnet, dass** ein Anschlagvorsprung zum Anlegen des Endabschnittes der Fluidleitung (7) vorgesehen ist.

17. Vorrichtung nach einem der Ansprüche 11 bis 16, **dadurch gekennzeichnet, dass** eine Mehrzahl von Kavitäten (13), Dornen (5) und Glocken (6) zum gleichzeitigen Herstellen der Mehrzahl von Fluidleitungen (7) vorgesehen sind.

## Claims

1. Method for producing a fluid line (7) with a connecting element formed on an end portion of the fluid line (7), wherein the connecting element comprises a coupling part (8) and a connector (70) which connects to the coupling part (8) towards the end of the fluid line,
comprising the following steps:
- injecting plastic into the cavity (13), with formation of the coupling part (8) on the fluid line (7);
- opening the cavity (13) and removing the fluid line (7),
**characterized by** the following steps:
- placing that portion of the fluid line (7) which is assigned to the coupling part (8) into an open cavity (13) of an injection-moulding tool (1) which forms the coupling part (8), wherein a length portion (70a) of the fluid line (7) that is assigned to the connector (70) projects beyond the cavity (13);
- closing the cavity (13) and opening out the length portion projecting beyond the cavity (13);
- receiving the opened-out length portion in a bell structure (6), wherein the outer diameter is calibrated in a manner sealing off with respect to the cavity (13), with formation of the connector (70).

2. Method according to Claim 1, **characterized in that** the length portion (70a) is firstly opened out so as to be oversized and is subsequently calibrated according to a predetermined smaller outer diameter by means of the bell structure (6) to form the connector (70).

3. Method according to Claim 1 or 2, **characterized in that** the inner diameter of the connector (70) received in the bell structure (6) is also calibrated.

4. Method according to one of Claims 1 to 3, **characterized in that** the connector (70) received in the bell structure (6) is provided with a bevel which narrows towards the end.

5. Method according to one of Claims 1 to 4, **characterized in that** that length portion of the fluid line (7) which is assigned to the coupling part (8) is provided with at least one radially outwardly projecting rib and/or material accumulation.

6. Method according to one of Claims 1 to 5, **characterized in that** a stop projection is provided for abutment of the end portion of the fluid line (7) with the cavity (13) open.

7. Method according to one of Claims 1 to 5, **characterized in that** use is made of a fluid line (7) based on an aluminium tube.

8. Method according to one of Claims 1 to 6, **characterized in that** the fluid line (7) is provided regionally with an outer-side plastic coating, and the same plastic or a plastic which is compatible with the plastic of the coating is used for the formation of the coupling part (8).

9. Method according to Claim 7, **characterized in that** a polyamide is used as a plastic.

10. Method according to one of Claims 1 to 9, **characterized in that** the injection-moulding tool (1) comprises multiple cavities (13) for simultaneous production of correspondingly multiple fluid lines (7).

11. Device for producing a fluid line (7) with a connecting element formed on an end portion of the fluid line, wherein the connecting element comprises a coupling part (8) and a connector (70) which connects to the coupling part (8) towards the end of the fluid line (7), **characterized by**
a. an openable and closable injection-moulding tool (1) with a cavity (13) which defines the outer contour of the coupling part (8) and into which that portion of the fluid line (7) which is assigned to the coupling part (8) can be placed, wherein, with the injection-moulding tool (1) closed, a length portion (70a) of the fluid line (7) that is assigned to the connector (70) projects beyond the cavity (13);
b. a mandrel (5) for end-side insertion and opening-out of that length portion (70a) of the fluid line (7) which is assigned to the connector (70);
c. a bell structure (6) for receiving and calibrating the opened-out length portion (70a) to form the connector (70) and for sealing off the connector (70) with respect to the cavity (13).

12. Device according to Claim 11, **characterized in that** the mandrel (5) and the bell structure (6) are arranged on a common displaceable tool carrier (2).

13. Device according to Claim 11 or 12, **characterized in that** the mandrel (5) has a larger outer diameter than the inner diameter of the bell structure (6).

14. Device according to one of Claims 11 to 13, **characterized in that** the bell structure (6) comprises a central calibrating mandrel (60) for calibrating the inner diameter of the connector (70) and/or for producing at least one radially outwardly projecting rib and/or material accumulation **in that** length portion of the fluid line (7) which is assigned to the coupling part (8).

15. Device according to one of Claims 11 to 14, **characterized in that** the bell structure (6) is configured in such a way that a bevel of the connector (70) that narrows towards the end can be produced.

16. Device according to one of Claims 11 to 15, **characterized in that** a stop projection is provided for abutment of the end portion of the fluid line (7).

17. Device according to one of Claims 11 to 16, **characterized in that** a plurality of cavities (13), mandrels (5) and bell structures (6) are provided for simultaneous production of the plurality of fluid lines (7).

## Revendications

1. Procédé de fabrication d'une conduite de fluide (7) avec un élément de liaison formé sur une section d'extrémité de la conduite de fluide (7), l'élément de liaison comprenant une partie d'accouplement (8) et une tubulure de raccordement (70) se raccordant à la partie d'accouplement (8) vers l'extrémité de la conduite de fluide,
présentant les étapes suivantes :
- l'injection de matière plastique dans la cavité (13) en formant la partie d'accouplement (8) sur la conduite de fluide (7) ;
- l'ouverture de la cavité (13) et le retrait de la conduite de fluide (7),
**caractérisé par** les étapes suivantes :
- l'insertion de la section de la conduite de fluide (7) associée à la partie d'accouplement (8) dans une cavité ouverte (13) d'un outil de moulage par injection (1) formant la partie d'accouplement (8), une section longitudinale (70a) de la conduite de fluide (7) associée à la tubulure de raccordement (70) dépassant de la cavité (13) ;
- la fermeture de la cavité (13) et l'élargissement de la section longitudinale dépassant de la cavité (13) ;
- la réception de la section longitudinale élargie dans une cloche (6), le diamètre extérieur étant calibré de manière étanche par rapport à la cavité (13) en formant la tubulure de raccordement (70).

2. Procédé selon la revendication 1, **caractérisé en ce que** la section longitudinale (70a) est tout d'abord élargie de manière excessive et ensuite calibrée au moyen de la cloche (6) en la tubulure de raccordement (70) avec un diamètre extérieur prédéterminé plus petit.

3. Procédé selon la revendication 1 ou 2, **caractérisé en ce que** le diamètre intérieur de la tubulure de raccordement (70) reçue dans la cloche (6) est également calibré.

4. Procédé selon l'une quelconque des revendications 1 à 3, **caractérisé en ce que** la tubulure de raccordement (70) reçue dans la cloche (6) est pourvue d'un chanfreinage qui se rétrécit vers l'extrémité.

5. Procédé selon l'une quelconque des revendications 1 à 4, **caractérisé en ce que** la section longitudinale de la conduite de fluide (7) associée à la partie d'accouplement (8) est pourvue d'au moins une nervure et/ou d'un renflement faisant saillie radialement vers l'extérieur.

6. Procédé selon l'une quelconque des revendications 1 à 5, **caractérisé en ce que**, lorsque la cavité (13) est ouverte, une saillie de butée est prévue pour l'appui de la section d'extrémité de la conduite de fluide (7).

7. Procédé selon l'une quelconque des revendications 1 à 5, **caractérisé en ce qu'**une conduite de fluide (7) à base d'un tube en aluminium est utilisée.

8. Procédé selon l'une quelconque des revendications 1 à 6, **caractérisé en ce que** la conduite de fluide (7) est pourvue par zones d'un revêtement en matière plastique sur le côté extérieur et la même matière plastique ou une matière plastique compatible avec la matière plastique du revêtement est utilisée pour la formation de la partie d'accouplement (8).

9. Procédé selon la revendication 7, **caractérisé en ce qu'**un polyamide est utilisé en tant que matière plastique.

10. Procédé selon l'une quelconque des revendications 1 à 9, **caractérisé en ce que** l'outil de moulage par injection (1) comprend plusieurs cavités (13) pour la fabrication simultanée de plusieurs conduites de fluide (7) correspondantes.

11. Dispositif pour la fabrication d'une conduite de fluide (7) avec un élément de liaison formé sur une section d'extrémité de la conduite de fluide, l'élément de liaison comprenant une partie d'accouplement (8) et une tubulure de raccordement (70) se raccordant à la partie d'accouplement (8) vers l'extrémité de la conduite de fluide (7), **caractérisé par**
a. un outil de moulage par injection (1) pouvant être ouvert et fermé, avec une cavité (13) définissant le contour extérieur de la partie d'accouplement (8), dans laquelle la section de la conduite de fluide (7) associée à la partie d'accouplement (8) peut être insérée, une section longitudinale (70a) de la conduite de fluide (7) associée à la tubulure de raccordement (70) dépassant de la cavité (13) lorsque l'outil de moulage par injection (1) est fermé ;
b. un mandrin (5) pour l'introduction et l'élargissement du côté de l'extrémité de la section longitudinale (70a) de la conduite de fluide (7) associée à la tubulure de raccordement (70) ;
c. une cloche (6) pour la réception et le calibrage de la section longitudinale élargie (70a) en la tubulure de raccordement (70) et pour l'étanchéification de la tubulure de raccordement (70) par rapport à la cavité (13).

12. Dispositif selon la revendication 11, **caractérisé en ce que** le mandrin (5) et la cloche (6) sont agencés sur un support d'outil commun (2) pouvant coulisser.

13. Dispositif selon la revendication 11 ou 12, **caractérisé en ce que** le mandrin (5) présente un diamètre extérieur plus grand que le diamètre intérieur de la cloche (6).

14. Dispositif selon l'une quelconque des revendications 11 à 13, **caractérisé en ce que** la cloche (6) comprend un mandrin de calibrage central (60) pour le calibrage du diamètre intérieur de la tubulure de raccordement (70) et/ou pour la production d'au moins une nervure et/ou un renflement faisant saillie radialement vers l'extérieur dans la section longitudinale de la conduite de fluide (7) associée à la partie d'accouplement (8).

15. Dispositif selon l'une quelconque des revendications 11 à 14, **caractérisé en ce que** la cloche (6) est configurée de telle sorte qu'un chanfreinage de la tubulure de raccordement (70) qui se rétrécit vers l'extrémité peut être produit.

16. Dispositif selon l'une quelconque des revendications 11 à 15, **caractérisé en ce qu'**une saillie de butée est prévue pour l'application de la section d'extrémité de la conduite de fluide (7).

17. Dispositif selon l'une quelconque des revendications 11 à 16, **caractérisé en ce qu'**une pluralité de cavités (13), de mandrins (5) et de cloches (6) sont prévus pour la fabrication simultanée de la pluralité de conduites de fluide (7).
